# EUROPEAN PATENT SPECIFICATION

(11) **EP 3 212 985 B1**
(45) Date of publication and mention of the grant of the patent: **14.07.2021**
(21) Application number: 15855553.2
(22) Date of filing: 30.10.2015
(51) Int. Cl.: F16N 7/38, F16N 13/16, F16N 25/02, F16N 11/04, F16N 19/00

(54) **AUTOMATIC LUBRICATION SYSTEM AND METHOD FOR LUBRICATING PARTS**
AUTOMATISCHES SCHMIERSYSTEM UND VERFAHREN ZUM SCHMIEREN VON TEILEN
SYSTÈME DE LUBRIFICATION AUTOMATIQUE ET PROCÉDÉ DE LUBRIFICATION DE PIÈCES

(30) Priority: 30.10.2014 FI 20140300; 09.06.2015 FI 20155437
(43) Date of publication of application: 06.09.2017
(73) Proprietor: Moksi, Jukka, 02970 Espoo (FI)
(72) Inventor: Moksi, Jukka, 02970 Espoo (FI)
(74) Representative: Heinonen & Co
(86) International application number: PCT/FI2015/050750
(87) International publication number: WO 2016/066906

(56) References cited:
- EP-A1- 2 177 720
- WO-A1-2016/176119
- CN-A- 102 032 431
- US-A- 2 164 273
- US-A- 3 822 002
- US-A- 5 076 343
- US-A- 5 285 871
- US-A1- 2007 137 934
- US-A1- 2007 137 934
- None

## Description

### FIELD OF THE INVENTION

Generally the present invention relates to lubrication systems. In particular, however not exclusively, the present invention concerns automatic lubrication systems that are connected to work devices' drive systems utilizing the inherent power of the lubricated device as the feeding force for the lubricant.

### BACKGROUND

Hydraulic and pneumatic devices tend to have mechanical parts that are under a lot of stress and mechanical wear. These devices need regular service and maintenance; i.e. several parts need timewise lubrication. Today, for many devices the lubrication is taking place in a manual fashion.

For example, transportation vehicles such as trucks with (tail) lifts and other working equipment need to be taken to service centers for lubrication maintenance. At these service centers mechanics go through the parts manually. This is time-consuming and affects availability of the truck for the intented purpose. Maintenance and repair operations add costs to the truck owner as well. The truck owner has to pay for extra gasoline (for taking the truck of its planned route), for the maintenance services and the truck driver's salary. Furthermore, all the maintenance time the truck is out of service means missed earning opportunities for the owner.

Some central lubrication systems exist today. However, these are mainly intended for larger machinery such as power plants, conveyor belts, paper machines etc.. Primary they apply oil as the lubricant fluid. Also these lubrication systems utilize a separate driving force such as an electric pump. Appliances without central lubrication systems are in a need of a simple and reliable lubrication system that may also be retrofitted into devices already in use. There is a need for a lubrication system that works automatically when the work device is used such that the user do not have to worry about painful maintenance tasks and may instead concentrate on his/her main work. A lubrication system with proper notification arrangements that informs of low lubricant levels is needed as well.

Document US 5,285,871 discloses a system for distributing measured quantities of viscous lubricant to a plurality of lubricating points. However, the solution has some drawbacks. The solution requires an own dedicated hydraulic system as the power source. Additionally, the control of the system is taking place by electric connectors and a timer. Further, the forward and reverse flow of the hydraulic fluid requires a multioutlet switching valve controlled by an electric solenoid. The actuating piston is returned to its initial position by feeding lubricant. This requires a substantially high pressure for the lubricant and the supply of the lubricant from the container is carried out by special piston pump means utilizing the hydraulic force of the power system.

US 2007/137934 A1 discloses a cutting tool lubrication system comprising a lubricating fluid reservoir, a fluid pump, and a series of check valves for controlling the flow of fluid between the reservoir, the pump and a nozzle from which the fluid is dispensed.

### SUMMARY OF THE INVENTION

The objective is to at least alleviate the problems described hereinabove not satisfactorily solved by the known arrangements, and to provide a feasible lubrication system that may be arranged to a variety of work devices. Another objective is to provide a lubrication system that may inform the user when lubricant levels are low.

The aforesaid objective is achieved by the embodiments of a system in accordance with the present invention. The solution may be applied to work devices, for example hydraulic or pneumatic devices, needing regular lubrication.

Accordingly, in one aspect of the present invention an automatic lubrication system comprises
- a lubricant container supplying a lubricant, preferably grease, to a plurality of lubricant feeder units,
- a plurality of lubricant feeder units, which lubricant feeder units supply the lubricant to a work device, wherein each lubricant feeder unit comprises
- a piston chamber allowing a piston to reciprocate,
- a piston to supply the lubricant to the work device and which piston separates a working pressure inlet and a lubricant inlet,
- a lubricant inlet for supplying lubricant from the lubricant container to the piston chamber,
- a valve member, preferably a check valve, allowing the lubricant to flow out from the piston chamber and blocking the flow back to the piston chamber,
- a working pressure inlet actuating the piston by supplying pressure to the piston from the work device when the work device is used,
- a body of the lubricant feeder unit, the body is arranged of a uniform piece, preferably steel, and wherein the working pressure inlet, lubricant inlet and piston chamber are grooves in the body,
each lubricant feeder unit comprises
- a support for an adjustment screw, the support is arranged to hold the adjustment screw,
- an adjustment screw for adjusting the stroke of the piston, the adjustment screw is arranged to face an end of the piston, and
- a spring configured to return the piston to its starting position,
the spring is arranged between the piston and the support.

In one embodiment the lubrication system comprises a plurality of lubricant feeder units that are attachable/detachble to each other forming a modular construction and wherein the lubricant inlets connect the piston chambers such that lubricant is supplied from the lubricant container to all piston chambers. The system may for example comprise one lubricant container and multiple lubricant feeder units. In some embodiments the system is modular, i.e. the amount of lubricant feeder units may be easily changed depending on the implementation. For example a tail lift may need a lubrication system with 12 lubricant feeder units whereas an excavator may need more if it has more parts that need to be lubricated. A lubrication system according to the present invention may also comprise less than 12 lubricant feeder units, e.g. 2 or 3 units.

In a further, either supplementary or alternative, embodiment the piston chambers are connected in parallel with the lubricant inlets such that the lubricant flow passes a piston chamber when its piston is in the stroke position. In some embodiment the lubricant inlet to the piston chamber is arranged adjacent the piston chamber such that the lubricant flows pass the piston chamber when the piston is in its stroke position. Multiple lubricant feeder units may be connected in series and/or in parallel. Furthermore, if one unit gets jammed and the piston gets stuck in its stroke position, the lubricant may pass the piston chamber and still provide lubrication to the following lubricant feeder units.

In a further, either supplementary or alternative, embodiment the lubricant feeder unit comprises adjustment means, preferably an adjustement screw, to adjust the stroke of the piston, and thereby the amount of lubricant supplied from the piston chamber to the work device.

In a further, either supplementary or alternative, embodiment the adjustment means is arranged to close a lubricant feeder unit by blocking the stroke of the piston.

According to the invention, a body of the lubricant feeder unit is arranged of a uniform piece, preferably steel, and wherein the working pressure inlet, lubricant inlet and piston chamber are grooves in the body.

The lubricant feeder units may be produced from steels, plastics, composites or other hard materials suitable for such lubrication solutions. In some embodiments the body of a lubricant feeder unit is produced of one uniform piece (e.g. steel). The inlets and/or chamber are processed as grooves or holes in the piece. In some embodiments, these pieces may be combined with screws or other attaching materials (e.g. glues and/or presses). The attached pieces may form a compact integral set of multiple lubricant feeder units.

In a further, either supplementary or alternative, embodiment the lubrication system is connected to a hydraulic drive system of a working device, or a pneumatic drive system of a working device via a pneumatic to hydraulic converter, and which hydraulic or pneumatic drive system provides the working pressure to the piston when the working device is used. The pneumatic to hydraulic converter converts pneumatic pressure in the work device to hydraulic pressure in the lubricant feeder unit.

In a further, either supplementary or alternative, embodiment the lubricant container comprises force applying means to supply the lubricant to the lubricant feeder unit. In a further, either supplementary or alternative, embodiment the lubricant container comprises a spring and a piston, optionally a shaft, and wherein the spring pushes the piston, optionally along the shaft. The force created by the spring presses the lubricant out from the container.

In a further, either supplementary or alternative, embodiment a first set of lubricant feeder units form a uniform structure, for example by attaching lubricant feeder units with screws, and which first set of lubricant feeder units is connected in series to a second set of lubricant feeder units that form a uniform structure.

In a further, either supplementary or alternative, embodiment at least two sets of lubricant feeder units are connected in series such that lubricant is supplied from a previous set of lubricant feeder units to the next one, and that each set of lubricant feeder units is connected to an own drive system that provides working pressure when the drive system is used.

In a further, either supplementary or alternative, embodiment the lubrication system comprises a number of pressure amplifiers to supply the lubricant further in the lubrication system, such as from one set of lubricant feeder units to a next set of lubricant feeder units.

In a further, either supplementary or alternative, embodiment the lubricant container comprises lubricant level notification means.

In a further, either supplementary or alternative, embodiment the lubricant level notification means comprises
- at least one reed switch, preferably in the shaft of the container,
- a magnet that moves along with the piston,
- a wireless transmitter, preferably in the cover of the container,
and wherein the reed switch notifies the transmitter when the magnet reaches the level of the reed switch.

In a further, either supplementary or alternative, embodiment the transmitter sends notification data from the reed switch to a remote server.

The reed switch, may preferably be arranged in the shaft of the container. In some embodiments the reed switch may be located in the body structure of the container. In some embodiments there may be multiple reed swithes, arranged for example on different heights in the shaft. Thereby, different lubricant levels may be signalled. The magnet may preferably be arranged close to the piston, for example inside the piston, above the piston or underneath the piston. A wireless transmitter may preferably be arranged in the cover of the container. The reed switch may be arranged to notify the transmitter when the magnet reaches the level of the reed switch. The transmitter may be further arranged to send such notification data to a remote server. In some embodiments, the data sent to a server may include other information as well such as location data, battery lifetime information data and/or, current speed data (if the lubrication is installed to a vehicle, for example).

In a further, either supplementary or alternative, embodiment the lubrication system is connected to a tail lift, preferably comprising 12 lubricant feeder units.

In a further, either supplementary or alternative, embodiment the valve member is a check valve (one-way valve). The valve allows the lubricant to flow one way but blocks the flow the opposite way. Thereby the piston presses the lubricant out of the piston chamber and the valve blocks the flow back to the piston chamber. In some embodiments there may be an outlet channel between the piston chamber and the valve member.

In a further, either supplementary or alternative, embodiment the lubricant is grease. Grease or other high viscosity lubricant liquids may be suitable in some applications as the high viscosity liquid may stay longer on the lubricated sight than lower viscosity liquids.

In a further, either supplementary or alternative, embodiment the piston is sealed to the piston chamber and may create suction to the lubricant inlet when returning to the starting position. The piston may assist the lubricant to flow into the piston chamber by creating suction to the lubricant inlet. The piston may be sealed with conventional sealing means such as a rubber O-ring. The piston may be configured to separate the lubricant inlet and the working pressure inlet. A sealing may improve such separation and/or improve the movement of the piston. In a further embodiment, the shaft of the piston may be sealed to the body of the lubricant feeder unit.

The utility of the present invention follows from a plurality of factors depending on each particular embodiment. Embodiments of the suggested solution may be easily installed to hydraulic and/or pneumatic work devices even after the device has been taken into use. Some embodiments may be initial installations in the work devices as part of original equipment. Embodiments of the suggested solution may be modular and scalable to suit a variety of use cases. Because of its modularity it may fit into small/tight places and suit relatively small devices, but it may also be scaled up and utilized in larger appliances where several parts need lubrication. Embodiments of the innovation create a system for multipurpose lubrication applications, in some context referred to as System MovaLube™.

The suggested solution may be fail-proof such that in an embodiment with multiple lubricant feeder units the lubricant may pass a piston chamber if a piston gets jammed.

Embodiments of the suggested solution may be durable. Embodiments of the suggested solution may also be easy to assemble due to a rigid body and threaded parts. Embodiments of the solution may also be easily maintained as different parts of the solution may be replaced easily.

Embodiments of the suggested solution may also improve the work efficiency and the work convenience for many workers as the solution may provide lubrication to different work devices automatically when the device is used. Therefore, a worker may not even notice the lubrication process and may focus fully on his/her main work. As the solution only provides lubrication when a device is used, the suggested solution may also provide lubricant efficiently.

Embodiments of the suggested solution may also notify when the lubricant levels are low. Therefore, a lubricant filling service may be combined with embodiments of the present solution. A service provider and/or a user may be informed when the lubrication system needs a refill. Embodiments of the suggested solution may therefore provide regular lubrication without any breaks.

The expression "a number of" refers herein to any positive integer starting from one (1), e.g. to one, two, or three.

The expression "a plurality of" refers herein to any positive integer starting from two (2), e.g. to two, three, or four.

The invention is defined by the features of the independent claim. Different embodiments of the present invention are disclosed in the dependent claims.

### BRIEF DESCRIPTION OF THE RELATED DRAWINGS

Next the invention is described in more detail with reference to the appended drawings in which
Fig. 1 is a sketch representing a cross-section of an embodiment of a lubricant feeder unit in accordance with the present invention.
Fig. 2 is a sketch of an embodiment of a lubrication system in accordance with the present invention.
Fig. 3 is a sketch of an embodiment of a lubricant container in accordance with the present invention.
Fig. 4 is a sketch of an embodiment of a lubrication system in accordance with the present invention with various system components and multiple drive system connections.
Fig. 5 is a flow diagram of an embodiment of a method in accordance with the present invention.

### DETAILED DESCRIPTION OF THE EMBODIMENTS

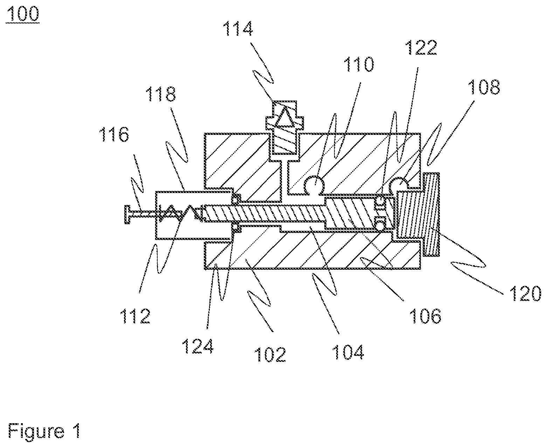

Figure 1 illustrates a cross-section of an embodiment of a lubricant feeder unit 100 in accordance with the present invention. The embodiment of the lubricant feeder unit 100 comprises a body 102, a piston chamber 104, a piston 106, a working pressure inlet 108, a lubricant inlet 110, returning means 112, a valve member 114, adjustment means 116, an adjustment means support 118, a stopper 120 and sealing means 122 and 124.

The body 102 may be produced from one uniform piece. For example, it may be machined of a piece of steel, plastic, composites or any other, preferably hard material, suitable for such lubrication application. In an embodiment where the body 102 constitutes of one unified piece, the piston chamber 104 may be a groove/hole in the body 102. The piston 106 may also be produced, for example, of steel, plastics, composites or any other hard suitable material. The piston's 106 dimensions are such that it fits the piston chamber 104 and may slide back and forth in the piston chamber between the stopper 120 and the adjustment means 116. However, the dimensions of the piston must be such that the lubrication from the lubricant inlet 110 does not flow from the lubricant inlet 110 side to the working pressure inlet side. Also, the pressure from the working pressure inlet 108 side may not either pass the piston to the lubricant inlet 110 side.

In figure 1 the piston 106 is presented in its starting position, i.e. the piston 106 is in the far right end of the piston chamber 106, the piston 106 against the stopper 120. The returning means 112, here a spring, pushes the piston 106 against the stopper 120.

The lubricant feeder unit 100 may be connected to a work device's hydraulic system (not in the figure) via its working pressure inlet 108. A work device may for example be a hydraulic device such as a tail lift or excavator, for example. When the work device is used a hydraulic pressure is supplied via the working pressure inlet 108 to the piston chamber 104. The hydraulic pressure creates a force on the piston 106, moving the piston 106 along the piston chamber 104 towards the adjustment means 116. When the piston 106 reaches the far left end of the piston chamber 104, either by hitting the adjustment means 116 (e.g. a screw) or the (left) end of the piston chamber 104, the piston 106 is in its stroke position.

The lubricant inlet 110 may be connected to a lubricant container (not shown in the figure). The lubricant container supplies lubricant via the lubricant inlet 110 to the piston chamber 104. The lubricant inlet 110 and the working pressure inlet 108 may be holes or grooves in the body 102 structure. When the piston 106 is in its stroke position, it may block the lubricant inlet 110 such that lubricant cannot flow into the piston chamber 104. However, the lubricant inlet 110 may be arranged adjacent the piston chamber 104 such that the lubricant may pass the particular piston chamber 104 when the piston 106 is in its stroke position and flow to a next lubricant feeder unit and its piston chamber, if there are multiple lubricant feeder units connected to each other.

Adjustment means 116 such as an adjustment screw is arranged on one side of the body 102 structure, facing the end of the piston 106. A support 118 is arranged to hold the adjustment screw 116. The stroke length, i.e. the movement of the piston 106 can be adjusted with the adjustment screw 116. The stroke length affects how much lubricant is supplied from the piston chamber 104 to the part that is lubricated. Therefore, by adjusting the adjustment screw 116, one can adjust the amount of lubrication supplied to a lubricated part.

A returning spring 112 is arranged between the support 118 and the piston. The spring 112 is arranged around the adjustment screw 116 and in the end of the piston. The piston 116 may have a smaller shaft for the placement of the spring 112. The spring 112 will work against the pressure from the working pressure inlet 108. When the hydraulic pressure releases the spring force exceeds the force from the working pressure inlet, whereupon the spring 112 will push the piston 106 back to its starting position. The liquid that provides the hydraulic pressure returns along the working pressure inlet 108 back to the work device.

The support 118, the stopper 120 and the valve member 114 may comprise threads such that they are attachable/detachable to/from the body 102 structure by screwing. The body 102 structure may have suitable threads to fit the attachment of said parts. The spring 112 may be easily arranged around the adjustment screw 116 when the support 118 is detachable.

The valve member 114, e.g. a check valve (i.e. one-way valve), is arranged after the piston chamber 104, preventing the lubricant flow back to the piston chamber 104. The piston 106 may create suction when returning to its starting position. A one-way valve 114 arranged after the piston chamber 104 prevents the lubricant flow back to the piston chamber 104, regardless of the suction effect.

The stopper 120 is arranged on one side of the body 102 such that it faces the piston 106. The piston chamber 104 may be machined in a body 102 of a steel block. The piston 106 is then placed inside the piston chamber 104. The hole is then blocked with the stopper 120. The piston may comprise conventional sealing means 122 and 124 such as O-rings or X-rings. A groove may be arranged in the piston 106 for the sealing 122 and another groove may be arranged in the body 102 for the sealing 124.

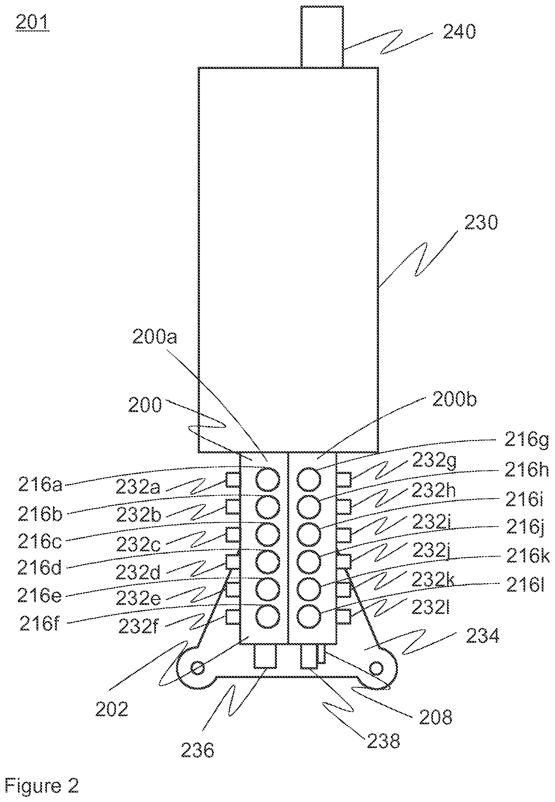

Figure 2 is a sketch of an embodiment of a lubrication system 201 in accordance with the present invention. The lubrication system 201 comprises a lubricant container 230 and a plurality of lubricant feeder units 200. The lubricant feeder units 200 form a compact undiform structure. In figure 2 is presented an embodiment with 12 lubricant feeder units. The lubricant container is connected to the lubricant feeder units 200 such that it supplies lubricant to all the lubricant feeder units. The lubricant inlets may be arranged such that lubricant flows through the piston chambers, supplying lubricant to the piston chambers for the lowest lubricant feeder units. When the lowest lubricant feeder units are filled up, the following feeder units are filled up and so on. Finally, all lubricant feeder units are filled with lubricant. A spring-loaded container 230 may supply lubricant automatically to the piston chambers, after the lubricant has been supplied to the part of the working device that needs lubrication.

The lubricant feeder units may be arranged such that one hydraulic working pressure inlet 208 connects to all lubricant feeder units. The hydraulic working pressure inlet 208 may be arranged in the bottom part of the set of lubricant feeder units 200 such that it connects to all piston chambers of the individual lubricant feeder units. The right sided lubricant feeder units 200b may be connected with one essentially vertical working pressure inlet line. The left sided lubricant feeder units 200a may also be connected with one essentially vertical working pressure inlet line. The two vertical working pressure lines may then be connected with at least one essentially horizontal line such that the working pressure is supplied to all piston chambers. The hydraulic working pressure inlet 208 may be connected to a work device's drive system, such as a hydraulic drive system or a pneumatic drive system via a pneumatic/hydraulic converter.

Each lubricant feeder unit has an own adjustment screw 216a-2161 to adjust the stroke of the piston and thereby the amount of lubricant supplied. An adjustment screw 216a-2161 can be used to fully close a particular lubricant feeder unit as well.

Each lubricant feeder unit comprises a lubricant outlet 232a-2321 that supplies lubricant to the part of the work device that needs lubrication. Conventional piping/tubes can be used to carry the lubrication. The lubrication system 201 comprises a backboard 234 that may be used to attach the lubrication system 201 near a work device or onto a work device. For example, if the lubrication system 201 is used to lubricate a tail lift, the lubrication system 201 may be attached to the rear end of a transportation vehicle, close to the tail lift.

The lubrication system 201 comprises a lubricant container filling inlet 236 that is used to fill the lubricant container 230. The filling inlet 236 may be connected to the container 230 through the lubricant inlets of the left sided lubricant feeder units 200a, for example. The lubrication system 201 comprises also a pressure relief valve/outlet 238 that lets lubricant out when the lubricant container 230 is full. The pressure relief valve/outlet 238 may be connected to the lubricant container 230 through the right sided lubricant feeder units 200b, for example. The lubrication system 201 comprises also a breather valve 240 to improve the movement of the piston of the lubricant container 230.

The body 202 of the set of lubricant feeder units 200 may be manufactured from two blocks of steel, for example. Each piece may comprise 6 lubricant feeder units, for example. The pieces may be connected with screws or other conventional attachment means. Alternatively, each lubricant feeder unit may be produced independently and connected to each other. Further, lubricant feeder units 200 may be constructed from pieces with some other amount, for example 2, 3 or 8 lubricant feeder units. As the body 202 may be machined from a block of steel, for example, multiple lubricant feeder units 200 combined together may still build a compact system.

A lubricant container may have a volume that fits preferably 0,1 - 20 kg, more preferably 0,2 - 10 kg and most preferably 0,5 - 5 kg lubricant, i.e. e.g. grease. In some alternative embodiments the container may even have a volume for more than 20 kg lubricant.

In some embodiments a lubricant feeder unit may be arranged to supply on one stroke preferably 0 - 20 g, more preferably 0 - 5 g and most preferably 0 - 3 g lubricant, i.e. e.g. grease. For some alternative embodiments the lubricant feeder unit may supply more than 20 g lubricant per stroke.

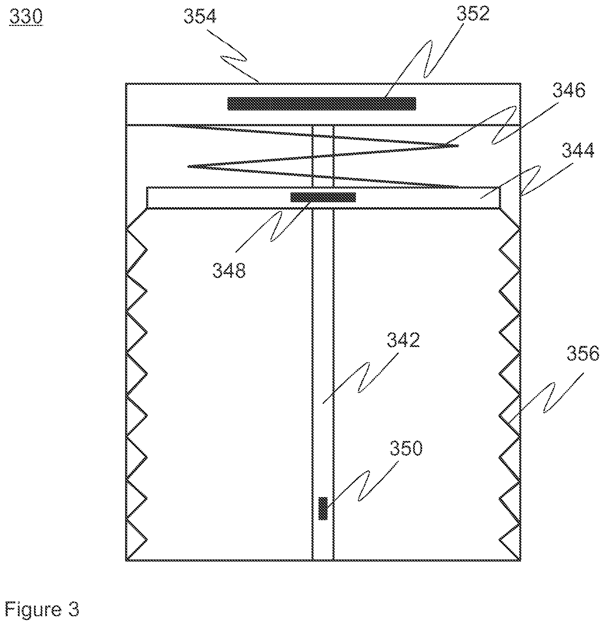

Figure 3 illustrates an embodiment of a lubricant container 330 in accordance with the present invention. The lubricant container 330 comprises a shaft 342, a piston 344 and a spring 346. The spring 346 pushes the piston 344 along the shaft 342 such that lubricant is supplied to a lubricant feeder unit (not in the figure). The lubricant container 330 comprises also a rubber bag 356. The ribber bag 356 may improve the sealing of the container 330 as the container may for example change shape in some conditions. A magnet 348 is arranged close to the piston 344, for example in, above or under the piston, such that it moves with the piston 344. A reed switch 350 is arranged in the shaft 342. A transmitter 352 with conventional data transfer means is arranged in the lid 354 of the container 330. Data wires are arranged inside the shaft 342 between the transmitter 352 and the reed switch 350. The spring 346 pushes the piston 344 along the shaft 342. The reed switch 350 sends a signal to the transmitter 352 when the magnet 348 reaches the reed switch 350. The transmitter 352 sends the data further to a remote server. Such notification system may be used to alert when the lubricant container 330 is becoming empty and needs a refill. In some embodiments, there may be multiple reed switches on different heights signaling different lubricant levels.

The transmitter 352 may work on conventional batteries (e.g. lithium battery) and have a few years' service lifetime. The transmitter 354 may be configured to collect and send location data (e.g. GPS coordinates), battery lifetime information data and/or a vehicle's current speed data, for example. The transmitter 352 may be configured to stay in an energy saving mode and turn on for example once a day to send relevant data to a remote server and then go back to energy saving mode.

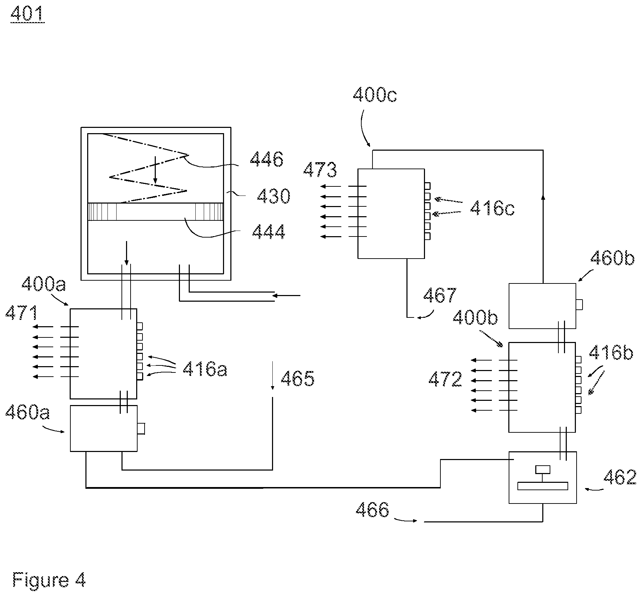

Figure 4 shows an embodiment of a lubrication system 401 in accordance with the present invention with multiple drive system connections 465, 466, 467. The lubrication system 401 comprises a lubricant container 430, lubricant feeder units 400a-400c, pressure amplifiers 460a, 460b and a pneumatic/hydraulic converter 462.

The lubricant container 430, comprising a spring 446 and a piston 444, supplies lubricant to the lubricant feeder units 400a-400c. Each set of lubricant feeder units 400a-400c may comprise multiple lubricant feeder units. The lubricant feeder units 400a-400c comprises adjustment means 416a-416c to adjust the amount of lubrication to the targets 471, 472, 473.

Each set of lubricant feeder units 400a-400c is connected to a work device's drive system 465, 466, 467, e.g. a vehicle's hydraulic or pneumatic drive system. The lubricant feeder units 400a-400c supply lubricant to the targets 471, 472, 473 when the vehicle's drive system is used.

For example the lubricant feeder units 400a may receive a hydraulic pressure from a vehicle's crane drive system 465. A pressure amplifier 460a is arranged close to the lubricant feeder units 400a to supply the lubricant longer distances to the next set of lubricant feeder units 400b.

The lubricant feeder units 400b may receive work pressure from a vehicle's break's pneumatic pressure 466, for example. The lubricant feeder units 400b works every time the breaks are used. A pneumatic to hydraulic pressure converter 462 is arranged in connection with the set of lubricant feeder units 400b to convert the pneumatic pressure into hydraulic pressure.

The lubricant feeder units 400c receive work pressure 467 from a vehicle's interchangeable container arrangement, for example. A pressure amplifier 460b is arranged in connection with the lubricant feeder units 400b to supply the lubricant to the lubricant feeder units 400c.

A lubrication system in accordance with the present invention may be connected to any device with a hydraulic or pneumatic drive system that have parts that need to be lubricated regularly. The device may therefore be called a work device. For example the lubrication system may be arranged to a tail lift. Every time the tail lift is used, the lubrication system will lubricate the necessary parts. Many tail lifts have 12 parts that need to be lubricated and therefore a lubrication system with 12 lubricant feeder units suits such applications. A lubrication system according to the present invention may also be connected to excavators, ship equipment, such as opening deck arrangements, or different types of vehicles, for example.

A drive system may for example be hydraulic or pneumatic. A hydraulic drive system may be directly connected to the lubrication system, creating a hydraulic pressure to the piston when the work device is used. A pneumatic drive system may be connected via a converter that converts pneumatic pressure to hydraulic pressure such that hydraulic pressure is applied to the piston when the work device is used.

The lubricant used in the lubrication system may be grease. Grease can be considered to be high viscosity liquids and suits well for some work devices that needs lubrication.

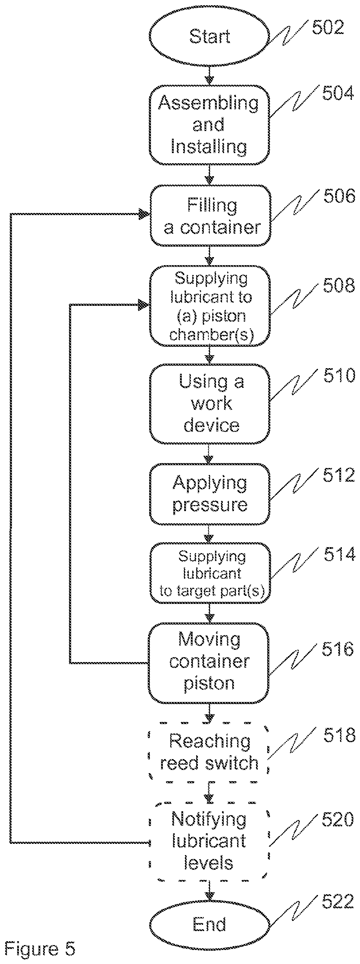

Figure 5 is a flow diagram of an embodiment of a method in accordance with the present invention.

At method start-up 502, preparatory actions may take place.

At 504, a lubrication system in accordance with the present invention is assembled, installed and adjusted. This step may include, for example, combining and/or modifying a number of lubricant feeder units to a lubricant container. A preferred amount of lubricant feeder units suitable for a specifc use case may be selected. The step may also include installing sets of lubricant feeder units in series. The step may also include connecting the lubricant feeder units to a work device's drive system(s). The lubricant feeder units may be connected to a work device's drive systems such that work pressure may be supplied via working pressure inlets to the piston chambers of the lubricant feeder unit(s). The lubricant outlets from the lubricant feeder units may also be connected to the target parts that need lubrication, for example via pipings/conduits suitable for such usage. At this step the stroke length of the pistons may be adjusted individually chamber by chamber according to estimated lubricant need. Some chambers may even be closed at this stage. The stroke length of the pistons may also be adjusted later on when the lubrication system is in use.

At 506, the lubricant container is filled up. The lubricant container may be filled up before installing it to the use application and/or it may be (re)filled when in use. The arrow from step 520 to step 506 represents a refill when the lubricant container is getting empty. In some embodiments the lubricant container may be filled up only once every 6 months or once a year, for example, depending on the consumption.

At 508, the lubricant container supplies lubricant from the container to the piston chamber(s) of the lubricant feeder unit(s).

At 510, the work device that is connected to the lubrication system is used.

At 512, pressure from the work device's drive system is supplied to the piston(s) the lubricant feeder unit(s). The pressure applied to the piston(s) is hydraulic pressure. The hydraulic pressure may be supplied directly from a work device. Alternatively, hydraulic pressure may be a result of pneumatic/hydraulic conversion.

At 514, the lubricant feeder unit(s) supply lubricant to the target part(s) that need lubrication.

At 516, the piston of the lubricant container moves and lubricant is supplied to the piston chambers. For example, a spring may automatically press the piston of the lubricant container after the lubricant feeder units have supplied lubricant to the target parts.

At 518, the piston of the lubricant container reaches a reed switch arranged in the container. The reed switch may be arranged in the shaft of the container. The shaft may comprise multiple reed swtiches or only one reed switch. A reed switch may be located in the lower end of the shaft such that low lubricant levels may be signaled.

At 520, lubricant levels are notified. The step may include the reed switch signalling a, preferably wireless, transmitter of the lubricant levels. The transmitter may be located in the cover of the container. The step may also include the transmitter sending such notification data to a remote server. Users and/or service providers may be informed of the (low) lubricant levels. The lubricant container may be (re)filled after (low) lubricant level notifications, which is presented in the figure with an arrow from step 520 to 506.

At 522, the method execution is ended.

As is understood by a person skilled in the art, some of the steps may change order depending on the use case. For example, a container may be filled in step 506 when the lubrication system is taken into usage. After that there may not be a need to fill the container in a while and thereby no need to execute step 506 before the container is empty. Therefore, method embodiments may start from step 508 in many instances.

Consequently, a skilled person may on the basis of this disclosure and general knowledge apply the provided teachings in order to implement the scope of the present invention as defined by the appended claims.

## Claims

1. An automatic lubrication system (201, 401) comprising
- a lubricant container (230, 330, 430) supplying a lubricant, preferably grease, to a plurality of lubricant feeder units (100),
- a plurality of lubricant feeder units (100), which lubricant feeder units supply the lubricant to a work device, wherein each lubricant feeder unit comprises
- a piston chamber (104) allowing a piston (106) to reciprocate,
- a piston (106) to supply the lubricant to the work device and which piston separates a working pressure inlet (108) and a lubricant inlet (110),
- a lubricant inlet (110) for supplying lubricant from the lubricant container (230, 330, 430) to the piston chamber (104),
- a valve member (114), preferably a check valve, allowing the lubricant to flow out from the piston chamber (104) and blocking the flow back to the piston chamber (104),
- a working pressure inlet (108) actuating the piston (106) by supplying pressure to the piston (106) from the work device when the work device is used,
- a body (102) of the lubricant feeder unit (100), the body (102) is arranged of a uniform piece, preferably steel, and wherein the working pressure inlet (108), lubricant inlet (110) and piston chamber (104) are grooves in the body, **characterized in that** each lubricant feeder unit comprises
- a support (118) for an adjustment screw (116), the support (118) is arranged to hold the adjustment screw (116),
- an adjustment screw (116) for adjusting the stroke of the piston (106), the adjustment screw is arranged to face an end of the piston (106), and
- a spring (112) configured to return the piston (106) to its starting position, the spring (106) is arranged between the piston (106) and the support (118).

2. The lubrication system (201, 401) of claim 1, which lubrication system comprises a plurality of lubricant feeder units (100) that are attachable/detachable to each other forming a modular construction and wherein the lubricant inlets (110) connect the piston chambers (104) such that lubricant is supplied from the lubricant container (230, 330, 430) to all piston chambers.

3. The lubrication system (201, 401) of claim 2, wherein the piston chambers (104) are connected in parallel with the lubricant inlets (110) such that the lubricant flow passes a piston chamber (104) when its piston (106) is in the stroke position.

4. The lubrication system (201, 401) of any preceding claim, wherein the lubricant feeder unit (100) comprises adjustment means (116), preferably an adjustment screw, to adjust the stroke of the piston (106), and thereby the amount of lubricant supplied from the piston chamber (104) to the work device, and wherein the adjustment means is arranged to close the lubricant feeder unit (100) by blocking the stroke of the piston (106).

5. The lubrication system (201, 401) of any preceding claim, wherein the lubrication system is connected to a hydraulic drive system of a working device, or a pneumatic drive system of a working device via a pneumatic to hydraulic converter (462), and which hydraulic or pneumatic drive system provides the working pressure to the piston (106) when the working device is used.

6. The lubrication system (201, 401) of any preceding claim, wherein the lubricant container (230, 330, 430) comprises a spring (346) and a piston (344), optionally a shaft (342), and wherein the spring (346) pushes the piston (344), optionally along the shaft (342).

7. The lubrication system (201, 401) of claim 2, wherein a first set of lubricant feeder units (400a) form a uniform structure, for example by attaching lubricant feeder units with screws, and which first set of lubricant feeder units (400a) is connected in series to a second set of lubricant feeder units (400b) that form a uniform structure.

8. The lubrication system (201, 401) of claim 7, wherein at least two sets of lubricant feeder units (400a-400c) are connected in series such that lubricant is supplied from a previous set of lubricant feeder units to the next one, and that each set of lubricant feeder units (400a-400c) is connected to an own drive system that provides working pressure when the drive system is used.

9. The lubrication system (201, 401) of claim 2, comprising a number of pressure amplifiers (460a, 460b) to supply the lubricant further in the lubrication system, such as from one set of lubricant feeder units (400a-400c) to a next set of lubricant feeder units (400a-400c).

10. The lubrication system (201, 401) of any preceding claim, wherein the lubricant container comprises lubricant level notification means, and wherein the lubricant level notification means comprises
- at least one reed switch (350), preferably in the shaft of the container,
- a magnet (348) that moves along with the piston,
- a wireless transmitter (352), preferably in the cover of the container,
and wherein the reed switch notifies the transmitter when the magnet reaches the level of the reed switch.

11. The lubrication system (201, 401) of claim 10, wherein the transmitter sends notification data from the reed switch to a remote server.

## Patentansprüche

1. Automatisches Schmiersystem (201, 401), umfassend
- einen Schmiermittelbehälter (230, 330, 430), der ein Schmiermittel, vorzugsweise Fett, an mehrere Schmiermittelzuführungseinheiten (100) liefert,
- mehrere Schmiermittelzuführungseinheiten (100), welche das Schmiermittel an eine Arbeitsvorrichtung liefern, wobei jede Schmiermittelzuführungseinheit Folgendes umfasst
- einen Kolbenraum (104), der einem Kolben (106) das Hin- und Herbewegen gestattet,
- einen Kolben (106) zum Liefern des Schmiermittels an die Arbeitsvorrichtung und welcher einen Arbeitsdruckeinlass (108) und einen Schmiermitteleinlass (110) trennt,
- einen Schmiermitteleinlass (110) zum Liefern von Schmiermittel von dem Schmiermittelbehälter (230, 330, 430) zum Kolbenraum (104),
- ein Ventilglied (114), vorzugsweise ein Rückschlagventil, das dem Schmiermittel gestattet, aus dem Kolbenraum (104) zu strömen, und die Strömung zurück zum Kolbenraum (104) blockiert,
- einen Arbeitsdruckeinlass (108), der den Kolben (106) durch Zuführen von Druck zum Kolben (106) von der Arbeitsvorrichtung betätigt, wenn die Arbeitsvorrichtung verwendet wird,
- einen Körper (102) der Schmiermittelzuführungseinheit (100), wobei der Körper (102) aus einem einförmigen Stück, vorzugsweise Stahl, angeordnet ist und wobei der Arbeitsdruckeinlass (108), der Schmiermitteleinlass (110) und der Kolbenraum (104) Aussparungen im Körper sind, **dadurch gekennzeichnet, dass** jede Schmiermittelzuführungseinheit Folgendes umfasst
- eine Halterung (118) für eine Einstellschraube (116), wobei die Halterung (118) angeordnet ist, um die Einstellschraube (116) zu halten,
- eine Einstellschraube (116) zum Einstellen des Hubs des Kolbens (106), wobei die Einstellschraube angeordnet ist, um zu einem Ende des Kolbens (106) zu weisen, und
- eine Feder (112), die konfiguriert ist, um den Kolben (106) in seine Startposition zurückzubringen, wobei die Feder (106) zwischen dem Kolben (106) und der Halterung (118) angeordnet ist.

2. Schmiersystem (201, 401) nach Anspruch 1, wobei das Schmiersystem mehrere Schmiermittelzuführungseinheiten (100) umfasst, die miteinander befestigt/voneinander getrennt werden können und eine modulare Konstruktion bilden, und wobei die Schmiermitteleinlässe (110) die Kolbenräume (104) derart verbinden, dass Schmiermittel vom Schmiermittelbehälter (230, 330, 430) an alle Kolbenräume geliefert wird.

3. Schmiersystem (201, 401) nach Anspruch 2, wobei die Kolbenräume (104) derart parallel mit den Schmiermitteleinlässen (110) verbunden sind, dass die Schmiermittelströmung einen Kolbenraum (104) passiert, wenn sein Kolben (106) in der Hubposition ist.

4. Schmiersystem (201, 401) nach einem der vorhergehenden Ansprüche, wobei die Schmiermittelzuführungseinheit (100) ein Einstellmittel (116), vorzugsweise eine Einstellschraube, umfasst, um den Hub des Kolbens (106) einzustellen und dadurch die Menge an Schmiermittel, die vom Kolbenraum (104) an die Arbeitsvorrichtung geliefert wird, und wobei das Einstellmittel angeordnet ist, um die Schmiermittelzuführungseinheit (100) durch Blockieren des Hubs des Kolbens (106) zu schließen.

5. Schmiersystem (201, 401) nach einem der vorhergehenden Ansprüche, wobei das Schmiersystem mit einem hydraulischen Antriebssystem einer Arbeitsvorrichtung oder einem pneumatischen Antriebssystem einer Arbeitsvorrichtung über einen Pneumatik-zu-Hydraulik-Wandler (462) verbunden ist, und wobei das hydraulische oder pneumatische Antriebssystem dem Kolben (106) den Arbeitsdruck bereitstellt, wenn die Arbeitsvorrichtung verwendet wird.

6. Schmiersystem (201, 401) nach einem der vorhergehenden Ansprüche, wobei der Schmiermittelbehälter (230, 330, 430) eine Feder (346) und einen Kolben (344), gegebenenfalls eine Welle (342), umfasst und wobei die Feder (346) den Kolben (344), gegebenenfalls entlang der Welle (342), drückt.

7. Schmiersystem (201, 401) nach Anspruch 2, wobei ein erster Satz von Schmiermittelzuführungseinheiten (400a) eine einförmige Struktur bildet, zum Beispiel indem Schmiermittelzuführungseinheiten mit Schrauben befestigt werden, und wobei der erste Satz von Schmiermittelzuführungseinheiten (400a) mit einem zweiten Satz von Schmiermittelzuführungseinheiten (400b) in Reihe verbunden ist, die eine einförmige Struktur bilden.

8. Schmiersystem (201, 401) nach Anspruch 7, wobei mindestens zwei Sätze von Schmiermittelzuführungseinheiten (400a-400c) derart in Reihe verbunden sind, dass Schmiermittel von einem vorherigen Satz von Schmiermittelzuführungseinheiten zum nächsten geliefert wird und dass jeder Satz von Schmiermittelzuführungseinheiten (400a-400c) mit seinem eigenen Antriebssystem verbunden ist, das Arbeitsdruck bereitstellt, wenn das Antriebssystem verwendet wird.

9. Schmiersystem (201, 401) nach Anspruch 2, umfassend eine Anzahl von Druckverstärkern (460a, 460b) zum weiteren Liefern des Schmiermittels im Schmiersystem, wie von einem Satz von Schmiermittelzuführungseinheiten (400a-400c) zu einem nächsten Satz von Schmiermittelzuführungseinheiten (400a-400c) .

10. Schmiersystem (201, 401) nach einem der vorhergehenden Ansprüche, wobei der Schmiermittelbehälter ein Schmiermittelstand-Benachrichtigungsmittel umfasst, und wobei das Schmiermittelstand-Benachrichtigungsmittel Folgendes umfasst
- mindestens einen Reed-Schalter (350), vorzugsweise in der Welle des Behälters,
- einen Magneten (348), der sich entlang des Kolbens bewegt,
- einen drahtlosen Sender (352), vorzugsweise in der Abdeckung des Behälters,
und wobei der Reed-Schalter den Sender benachrichtigt, wenn der Magnet den Stand des Reed-Schalters erreicht.

11. Schmiersystem (201, 401) nach Anspruch 10, wobei der Sender Benachrichtigungsdaten vom Reed-Schalter zu einem externen Server sendet.

## Revendications

1. Système de lubrification automatique (201, 401) comprenant :
- un récipient de lubrifiant (230, 330, 430) fournissant un lubrifiant, de préférence de la graisse, à une pluralité d'unités d'alimentation en lubrifiant (100),
- une pluralité d'unités d'alimentation en lubrifiant (100), lesdites unités d'alimentation en lubrifiant fournissant le lubrifiant à un dispositif de travail, chaque unité d'alimentation en lubrifiant comprenant :
- une chambre de piston (104) permettant à un piston (106) d'effectuer un mouvement de va-et-vient,
- un piston (106) permettant de fournir le lubrifiant au dispositif de travail, ledit piston séparant une entrée de pression de travail (108) et une entrée de lubrifiant (110),
- une entrée de lubrifiant (110) permettant de fournir du lubrifiant à la chambre de piston (104) à partir du récipient de lubrifiant (230, 330, 430),
- un élément de soupape (114), de préférence un clapet antiretour, permettant au lubrifiant de s'écouler hors de la chambre de piston (104) et de bloquer le reflux vers la chambre de piston (104),
- une entrée de pression de travail (108) actionnant le piston (106) en fournissant une pression au piston (106) à partir du dispositif de travail lorsque le dispositif de travail est utilisé,
- un corps (102) de l'unité d'alimentation en lubrifiant (100), le corps (102) étant constitué d'une pièce uniforme, de préférence d'acier, et dans lequel l'entrée de pression de travail (108), l'entrée de lubrifiant (110) et la chambre de piston (104) sont des gorges dans le corps, **caractérisé en ce que** chaque unité d'alimentation en lubrifiant comprend :
- un support (118) pour une vis de réglage (116), le support (118) étant agencé pour maintenir la vis de réglage (116),
- une vis de réglage (116) destinée à régler la course du piston (106), la vis de réglage étant agencée pour faire face à une extrémité du piston (106), et
- un ressort (112) configuré pour renvoyer le piston (106) vers sa position de départ, le ressort (106) étant agencé entre le piston (106) et le support (118).

2. Système de lubrification (201, 401) selon la revendication 1, ledit système de lubrification comprenant une pluralité d'unités d'alimentation en lubrifiant (100) aptes à être attachées les unes aux autres / détachées les unes des autres en formant une construction modulaire et dans lequel les entrées de lubrifiant (110) relient les chambres de piston (104) de manière à alimenter du lubrifiant à partir du récipient de lubrifiant (230, 330, 430) vers toutes les chambres de piston.

3. Système de lubrification (201, 401) selon la revendication 2, dans lequel les chambres de piston (104) sont reliées en parallèle aux entrées de lubrifiant (110) de manière à ce que le flux de lubrifiant passe par une chambre de piston (104) lorsque son piston (106) se trouve dans la position de course.

4. Système de lubrification (201, 401) selon l'une quelconque des revendications précédentes, dans lequel l'unité d'alimentation en lubrifiant (100) comprend un moyen de réglage (116), de préférence une vis de réglage, pour le réglage de la course du piston (106), et par conséquent de la quantité de lubrifiant alimentée depuis la chambre de piston (104) vers le dispositif de travail, et dans lequel le moyen de réglage est conçu pour fermer l'unité d'alimentation en lubrifiant (100) en bloquant la course du piston (106).

5. Système de lubrification (201, 401) selon l'une quelconque des revendications précédentes, dans lequel le système de lubrification est relié à un système d'entraînement hydraulique d'un dispositif de travail, ou à un système d'entraînement pneumatique d'un dispositif de travail par le biais d'un convertisseur pneumatique ou hydraulique (462), et ledit système d'entraînement hydraulique ou pneumatique fournissant la pression de travail au piston (106) lors de l'utilisation du dispositif de travail.

6. Système de lubrification (201, 401) selon l'une quelconque des revendications précédentes, dans lequel le récipient de lubrifiant (230, 330, 430) comprend un ressort (346) et un piston (344), optionnellement un arbre (342), et dans lequel le ressort (346) pousse le piston (344), optionnellement le long de l'arbre (342).

7. Système de lubrification (201, 401) selon la revendication 2, dans lequel un premier ensemble d'unités d'alimentation en lubrifiant (400a) forme une structure uniforme, par exemple par fixation d'unités d'alimentation en lubrifiant à l'aide de vis, et ledit premier ensemble d'unités d'alimentation en lubrifiant (400a) étant relié en série à un deuxième ensemble d'unités d'alimentation en lubrifiant (400b) formant une structure uniforme.

8. Système de lubrification (201, 401) selon la revendication 7, dans lequel au moins deux ensembles d'unités d'alimentation en lubrifiant (400a-400c) sont reliés en série de telle façon que du lubrifiant est alimenté à partir d'un ensemble précédent d'unités d'alimentation en lubrifiant vers le suivant, et que chaque ensemble d'unités d'alimentation en lubrifiant (400a-400c) est relié à un système d'entraînement propre, lequel fournit la pression de travail lors de l'utilisation du système d'entraînement.

9. Système de lubrification (201, 401) selon la revendication 2, comprenant un nombre d'amplificateurs de pression (460a, 460b) pour acheminer le lubrifiant plus loin dans le système de lubrification, tel qu'à partir d'un ensemble d'unités d'alimentation en lubrifiant (400a-400c) vers un ensemble suivant d'unités d'alimentation en lubrifiant (400a-400c).

10. Système de lubrification (201, 401) selon l'une quelconque des revendications précédentes, dans lequel le récipient de lubrifiant comprend un moyen de notification de niveau de lubrifiant, et dans lequel le moyen de notification de niveau de lubrifiant comprend :
- au moins un commutateur à lames (350), de préférence dans l'arbre du récipient,
- un aimant (348) déplaçable ensemble avec le piston,
- un émetteur sans fil (352), de préférence dans le couvercle du récipient,
et dans lequel le commutateur à lames avertit l'émetteur lorsque l'aimant atteint le niveau du commutateur à lames.

11. Système de lubrification (201, 401) selon la revendication 10, dans lequel l'émetteur envoie des données de notification du commutateur à lames à un serveur distant.
